# EUROPÄISCHE PATENTSCHRIFT

(11) **EP 3 919 956 B1**
(45) Veröffentlichungstag und Bekanntmachung des Hinweises auf die Patenterteilung: **10.09.2025**
(21) Anmeldenummer: 21172733.4
(22) Anmeldetag: 07.05.2021
(51) Int. Cl.: G02B 7/00, G02B 21/16, G02B 21/24

(54) **WECHSELEINRICHTUNG FÜR OPTISCHE KOMPONENTEN IN EINEM MIKROSKOP**
CHANGING DEVICE FOR OPTICAL COMPONENTS IN A MICROSCOPE
DISPOSITIF DE CHANGEMENT POUR COMPOSANTS OPTIQUES DANS UN MICROSCOPE

(30) Priorität: 04.06.2020 DE 102020207026
(43) Veröffentlichungstag der Anmeldung: 08.12.2021
(73) Patentinhaber: Carl Zeiss Microscopy GmbH, 07745 Jena (DE)
(72) Erfinder: STEGMANN, Daniel, 99441 Großschwabhausen (DE); SCHNUELL, Peter, 37130 Gleichen (DE); FRITZSCHE, Michael, 07747 Jena (DE); LINKE, Peter, 07747 Jena (DE)

(56) Entgegenhaltungen:
- US-A1- 2019 310 441
- US-B1- 6 414 805
- "Mounting Optics in Optical Instruments, 2nd Edition", 31 December 2008, SPIE, ISBN: 978-0-8194-8121-4, article YODER PAUL R: "Techniques for Mounting Smaller Nonmetallic Mirrors", pages: 353 - 365, XP055852343
- ANONYMOUS: "Modular OptiBlocks Prototyping System Introduction", 9 December 2007 (2007-12-09), XP055852487, Retrieved from the Internet <URL:https://www.tecnicaenlaboratorios.com/Prizmatix/PDF/Modular_OptiBlocks_Prototyping_System.pdf> [retrieved on 20211019]
- N/A: "Axio Imager Vario Material Micrsocope Operating Manual", CARL ZEISS MICROIMAGING GMBH, 1 August 2010 (2010-08-01), pages 1 - 161, XP055417310, Retrieved from the Internet <URL:http://www.ueb.cas.cz/cs/system/files/users/public/01_common/imaging_facility/Zeiss_Apotome_2/AxioImager_manual.pdf> [retrieved on 20171019]

## Beschreibung

Die vorliegende Erfindung betrifft eine Wechseleinrichtung für optische Komponenten bei einem Mikroskop, mit einer optischen Komponente, die eine plane Fläche aufweist, einem Träger zum Einlegen und Haltern der optischen Komponente und einer Aufnahme zum Haltern des Trägers in einem Strahlengang des Mikroskops.

Eine solche Vorrichtung ist aus EP 1055947 B1 in Form eines Wechselsystems für optische Komponenten bekannt. Verschiedene optische Komponenten wie Reflektoren, Filter, Polarisatoren oder Vergrößerungssysteme werden in Bauteile aufgenommen und diese durch Federkraft gegen Anschläge im Wechselsystem gehalten. Dabei weisen die Bauteile zwei Flansche auf, die durch die Federn gegen zwei parallele Winkel am Wechselsystem gedrückt werden. Die Winkel am Wechselsystem können dabei jeweils von zwei zueinander senkrecht stehenden Flächen gebildet werden.

Die EP 2018585 B1 offenbart ein Mikroskop mit einer Wechseleinrichtung für optische Elemente und die DE 102012003984 A1 eine Wechseleinrichtung für optische Komponenten an einem Mikroskop.

Im Stand der Technik werden in Mikroskopen Wechseleinrichtungen eingebaut, die es ermöglichen, unterschiedliche Strahlteiler und Filter in den Strahlengang des Mikroskops einzubringen. Auch sind austauschbare Träger von Strahlteilern und Filtern Stand der Technik.

Ausgehend hiervon soll eine Wechselvorrichtung für optische Komponenten in einem Mikroskop bereitgestellt werden, die eine genaure Positionierung der optischen Komponente im Strahlengang des Mikroskops ermöglicht und den Bearbeitungsaufwand reduziert.

Die Erfindung ist in Anspruch 1 definiert. Vorteilhafte Weiterbildungen sind in den abhängigen Ansprüchen angegeben.

Die Wechseleinrichtung dient der Einbringung von optischen Komponenten in einen Strahlengang eines Mikroskops. Die Wechseleinrichtung findet z. B. in der Fluoreszenzmikroskopie, zur Realisierung von Fluoreszenzbeleuchtung und -aufnahmen Anwendung. Bei der optischen Komponente kann es sich um einen Strahlteiler oder einen Filter handeln; auch andere optische Komponenten sind denkbar für beliebige Mikroskopanwendungen, wie beispielsweise Auflicht-, Hellfeld-, Dunkelfeld- oder Pol-Anwendungen/-Kontrast, sind denkbar. Auch die gleichzeitige Einbringung mehrerer optischer Komponenten in den Strahlengang des Mikroskops ist vorgesehen. Mit Hilfe der optischen Komponente in Form eines Strahlteilers werden Lichtstrahlen (Anregungslicht), welche von einer Lichtquelle emittiert werden, in den Strahlengang eines Objektivs im Mikroskop eingekoppelt.

Die optische Komponente wird zur Einbringung in den Strahlengang des Mikroskops in einen Träger eingelegt und/oder von diesem gehaltert. Als Träger werden in der Fluoreszenzmikroskopie z. B. Push&Click-Böckchen verwendet. Auch andere Träger, wie beispielsweise rahmenförmige Halter, sind mit der Wechseleinrichtung kompatibel. Die optische Komponente, welche in den Träger eingelegt wird, weist eine plane Fläche auf. Z. B. kann die optische Komponente als planparallele Platte ausgeführt sein. Weiter sind im Träger Auflageflächen vorgesehen, die ebenfalls eine plane Oberfläche aufweisen. Die optische Komponente wird bevorzugt mit ihrer planen Fläche mit Hilfe von zweiten Fixiermitteln an die Auflageflächen des Trägers gedrückt. An der Aufnahme wird der Träger befestigt. Zur Befestigung des Trägers an der Aufnahme sind erste Fixiermittel vorgesehen. Insbesondere sind sowohl am Träger als auch an der Aufnahme Magnete angebracht. Diese Magnete können sich sowohl auf den Aufnahme- als auch auf den Positionierflächen befinden. Mit Hilfe der ersten Fixiermittel werden die Positionierflächen am Träger gegen die Anlageflächen an der Aufnahme gehalten und daran befestigt. Der wesentliche Vorteil der Wechseleinrichtung besteht darin, dass die Fläche, auf der die optische Komponente (im Falle des Fluoreszenzmikroskops der Strahlteiler) aufliegt, und die Fläche, mit der der Träger an der Aufnahme aufliegt, in derselben Ebene liegen. Dadurch geht nur die Ebenheit dieser Fläche in die Toleranzberechnungen ein, was sowohl zu einer genaueren Positionierung der optischen Komponente im Strahlengang, als auch zu einer kostengünstigeren Produktion des Trägers und der Aufnahme führt. Beispielsweise in der spanenden Fertigung in einer Aufspannung hat eine Reduzierung der Toleranzkette eine geringere Abweichung sowie eine günstigere Bearbeitung zur Folge.

Die zweiten Fixiermittel sind bevorzugt am Träger angebracht und sichern die Komponenten gegen die im Betrieb oder beim Transport auftretenden Kräfte (Fliehkraft, Beschleunigungskraft, Trägheitskräfte) die optische Komponente nicht von den Auflageflächen abheben können. Die zweiten Fixiermittel können ebenso an der Aufnahme angebracht sein. Als Fixiermittel werden meist ein oder mehrere federnde Elemente verwendet. Die federnden Elemente können dabei Bestandteil der optischen Komponente sein (z.B. Festkörpergelenke) oder als extra Blattfedern ausgeführt sein. Ebenfalls können die federnden Elemente direkt an einer Aufnahme für den Träger befestigt sein.

Die Aufnahme ist in einem Fluoreszenzmikroskop meist als Reflektorrevolver ausgeführt, aber auch andere Formen der Aufnahme sind denkbar. Allerdings ist es vorteilhaft, wenn ein Mikroskop, insbesondere ein Fluoreszenzmikroskop mehrere verschiedene optische Komponenten beinhaltet, zwischen denen manuell oder motorisch umgeschaltet wird. So werden an der Aufnahme vorzugsweise mehrere Träger befestigt.

Wichtig ist es, dass die Positionierflächen am Träger in derselben Ebene liegen, wie die Auflageflächen am Träger. Sie sind in einer bevorzugten Ausführungsform z. B. am selben Flanschteil, Ansatz etc. ausgebildet. Wird der Träger an der Aufnahme mit Hilfe der ersten Fixiermittel befestigt, liegt die optische Komponente mit ihrer planen Fläche in derselben Ebene am Träger auf, in der auch die Aufnahme am Träger anliegt.

Um eine derartige Befestigung des Trägers an der Aufnahme zu realisieren, ist es notwendig, dass die optische Komponente, wenn diese an die Auflageflächen am Träger gedrückt wird, die Positionierflächen am Träger nicht überdeckt.

Für einen kurzen Kraftfluss ist es vorteilhaft, wenn die Magnete in der Aufnahme- bzw. Anlagefläche sitzen, wobei darauf zu achten ist, dass die Magnete nicht über die jeweilige Fläche hinausragen. Die Kontaktkraft kann neben der Magnetkraft auch durch Federelemente, Verschrauben oder Ähnliches realisiert werden. Mit dem erläuterten Prinzip der Befestigung des Trägers können unterschiedlich große Strahlteiler, Filter oder andere optische Komponenten an der Aufnahme eingebaut werden. Dadurch können an einer Aufnahme auch mehrere Träger unterschiedlicher Größe befestigt werden. Wichtig ist dabei, dass die Magnetkraft, oder die jeweilige andere Kraft, bei der Verwendung anderer zweiter Fixiermittel, so ausgelegt ist, dass die im Betrieb und beim Transport auftretenden Kräften (Federkraft, Fliehkraft, Trägheitskräfte, etc.) den Träger nicht von der Aufnahme loslösen können.

Wird die Kontaktkraft zwischen Träger und Aufnahme mittels Magnete realisiert, bietet sich weiter der Vorteil, dass ein einfacher und werkzeugloser Wechsel des Trägers an der Aufnahme möglich ist. Dadurch gestaltet sich ein Wechsel des Trägers einfacher, was durch den Benutzer gewünscht ist, da insbesondere in der Fluoreszenzmikroskopie teilweise sehr spezifische optische Komponenten verwendet werden.

Weiter sorgt die Möglichkeit des Einbaus unterschiedlich großer optischer Komponenten in einer Aufnahme dafür, dass ein und dieselbe Aufnahme für die Anbringung zahlreicher unterschiedlicher Träger geeignet ist. Dies erhöht die Stückzahlen baugleicher Aufnahmen in der Produktion, wodurch sogar gegebenenfalls neue Fertigungsverfahren, wie z.B. Aluminium-Druckguss rentabel werden könnten.

In einer bevorzugten Ausführungsform kann die optische Komponente, welche in den Strahlengang des Mikroskops eingebracht wird, ein Strahlteiler sein, und die Auflagefläche für die plane Fläche des Strahlteilers liegt in einer Ebene, die um 45° zu einer optischen Achse, welche senkrecht zwischen einem Detektor und einer Probe verläuft, geneigt ist. Dabei benötigt die Aufnahme entsprechend auch um 45° geneigte Aufnahmeflächen, welche aber mit den gängigen Herstellungsmaschinen (z. B. 5-Achs-Fräsmaschinen) ohne Probleme herstellbar sind.

Grundsätzlich kann durch die Positionier- und Auflageflächen eine Bewegung sowohl der Träger, als auch der Strahlteiler nur parallel zu dieser Funktionsfläche erfolgen. Folglich bleibt der Reflexionswinkel eines Strahlteilers auch bei einer Verschiebung der Komponente gleich, solange ein entsprechend groß definierter Bereich des Strahlteilers mit den funktionswirksamen Schichten versehen ist.

Bevorzugt sind am Träger Seitenführungen vorgesehen, die ein laterales Verschieben des Strahlteilers am Träger verhindern. Ebenso sind bevorzugt an der Aufnahme Anlagestifte vorgesehen, die eine laterale Verschiebung des Trägers an der Aufnahme verhindern.

In einer weiteren bevorzugten Ausführungsform kann der Träger zweiteilig durch ein Oberteil und ein Unterteil ausgebildet sein, welche miteinander verbunden sind, vorzugsweise durch ein Scharnier. Hierbei sind bevorzugt im Oberteil die Positionierflächen und die Auflageflächen und im Unterteil federnde Elemente vorgesehen. In der zweiteiligen Ausführungsform des Trägers kann die optische Komponente auf die federnden Elemente am Unterteil aufgelegt werden, wobei eine laterale Verschiebung der optischen Komponente optional durch Seitenführungen am Unterteil verhindert wird. Durch das Scharnier kann das Oberteil positionsgenau an das Unterteil angelegt werden. Dort kann das Oberteil dann durch weitere Fixiermittel mit dem Unterteil verbunden werden. Die weiteren Fixiermittel zum Verbinden von Oberteil und Unterteil können z. B. durch Magnete realisiert werden, wobei das Verschließen mittels Magneten eine einfache, werkzeuglose Bedienung des Nutzers ermöglicht. Ebenso ist auch ein Verschrauben oder eine Befestigung durch federnde Bleche möglich. Wird das Oberteil am Unterteil befestigt, drücken federnde Elemente die plane Fläche der optischen Komponente an die Auflageflächen am Oberteil des Trägers, wodurch die optische Komponente im Träger fixiert wird.

Mit Hilfe des Trägers können auch Filter in den Strahlengang eines Mikroskops eingebracht werden. In einer weiteren bevorzugten Ausführungsform kann am Träger eine Aussparung für die Befestigung eines Filterhalters vorgesehen sein. Die Filter sitzen in den Filterhaltern auf einer Aufnahme auf und können mit Hilfe einer zylindrischen Passbohrung im Filterhalter befestigt und zentriert werden. Die zylindrischen Passbohrungen zur Zentrierung der Filter können ebenfalls direkt am Träger vorgesehen sein. Bevorzugt sind in den Aussparungen am Träger zusätzliche Fixiermittel, wie zum Beispiel Magnete, angebracht, um den Filterhalter am Träger einzubauen. Dabei muss die Fixierung so gestaltet sein, dass die im Betrieb und beim Transport auftretenden Kräfte (Fliehkraft, Beschleunigungskraft, Trägheitskräfte) den Filter nicht von der Fläche, an die er befestigt ist, abheben können. Neben der Befestigung des Filterhalters direkt am Träger, kann auch an der Aufnahme ein Filterrad vorgesehen sein, an welchem die Filterhalter mit den darin befindlichen Filtern befestigt werden. Die Fixierung kann in dieser Ausführungsform wiederum mit Magneten erfolgen. Zur Zentrierung des Filters ist hierbei am Filterhalter oder am Filterrad optional eine zylindrische Passbohrung vorgesehen und die Magnetkraft muss wiederum derart gewählt werden.

In einer bevorzugten Ausführungsform kann der Träger einseitig eine Fase aufweisen. Ebenso kann die optische Komponente einseitig eine Fase aufweisen. Durch eine derartige Ausgestaltung des Trägers und der optischen Komponente kann der seitenrichtige Einbau der optischen Komponente sichergestellt werden. Dies verhindert, dass die Beschichtung der optischen Komponente falsch herum im Strahlengang des Mikroskops platziert wird.

Die Erfindung wird nachfolgend unter Bezugnahme auf die Zeichnung beispielhalber noch näher erläutert. In der Zeichnung zeigt:
- Fig. 1: einen Aufbau eines Mikroskops,
- Fig. 2: einen Träger in einer Ausführungsform als Push&Click-Böckchen,
- Fig. 3: ein Oberteil eines Trägers in der Ausführungsform als Push&Click-Böckchen,
- Fig. 4A und Fig. 4B: eine Verbindung eines Trägers mit einer Aufnahme,
- Fig. 5: eine Schnittdarstellung eines Filters mit einem Filterhalter,
- Fig. 6 und Fig. 7: eine Verbindung eines Filterhalters mit einem Träger,
- Fig. 8: eine Wechseleinrichtung vollständig mit Trägern besetzt,
- Fig. 9: den Einbau eines Trägers in der Ausführungsform als Halter,
- Fig. 10: eine Sicht auf eine Unterseite eines Halters,
- Fig. 11: eine Sicht auf eine Aufnahme für den Fall, dass ein Träger als Halter ausgeführt ist,
- Fig. 12: eine Wechseleinrichtung vollständig mit Haltern besetzt und
- Fig. 13: eine Aufnahme mit einem Filterrad versehen.

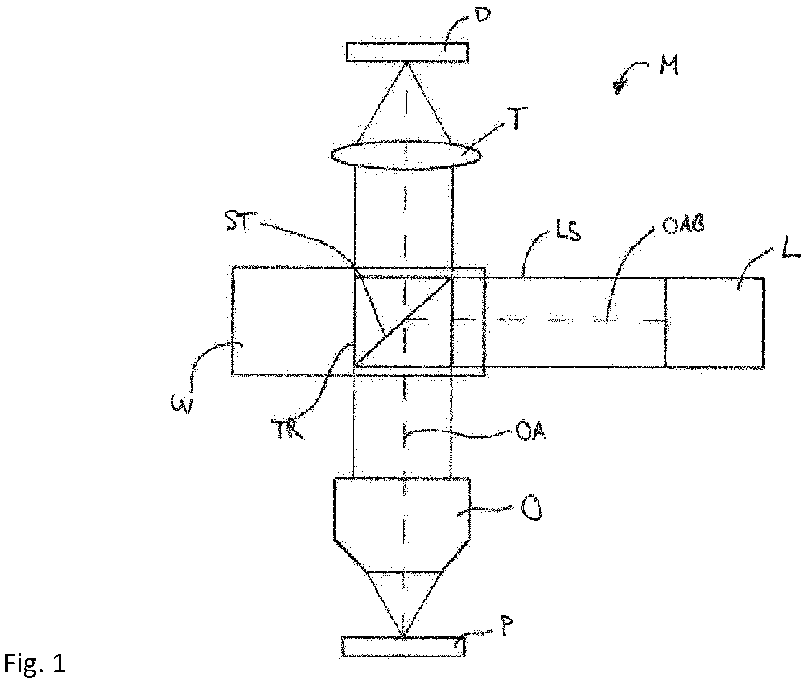

In Fig. 1 ist der grundlegende Aufbau eines Mikroskops M dargestellt, in welchem eine Wechseleinrichtung W verbaut ist. Das Mikroskop M weist neben der Wechseleinrichtung W eine Lichtquelle L, ein Objektiv O, eine Tubuslinse T sowie einen Detektor D auf. In der Wechseleinrichtung W ist ein Strahlteiler ST vorgesehen mit dessen Hilfe Beleuchtungsstrahlung LS von der Lichtquelle L, die entlang einer optischen Achse OAB einfällt, und entlang einer optischen Achse OA auf die Probe P umgelenkt werden. Dieser Strahlteiler ST ist in einem Träger TR verbaut.

Mit Hilfe der Wechseleinrichtung W und des darin eingebauten Trägers TR ist der Strahlteiler ST im Strahlengang gehalten, um die Beleuchtungsstrahlung LS, welche von der Lichtquelle L emittiert wird, in den Detektionsstrahlengang des Mikroskops M längs der optischen Achse OA einzukoppeln und dadurch die Probe P zu beleuchten. In einer Ausführungsform weist der Strahlteiler ST filternde Eigenschaften auf, wodurch er Lichtstrahlen LS sowohl reflektiert, als auch transmittiert. In einer weiteren Ausführungsform werden zusätzlich Filter in den Strahlengang eingebracht. Die Wechseleinrichtung findet insbesondere in der Fluoreszenzmikroskopie Anwendung. Da es im Anwendungsfeld der Fluoreszenzmikroskopie sehr viele verschiedene Farbstoffe gibt, die jeweils bei einer anderen Wellenlänge angeregt werden und Licht emittieren, beinhaltet die Wechselvorrichtung mehrere verschiedene Strahlteiler ST, zwischen denen umgeschaltet werden kann. Jeder Strahlteiler ST ist dabei in einen Träger TR eingebaut. In. d. R. ist die Möglichkeit des Austauschens der Träger TR vorgesehen, da oftmals sehr spezifische Strahlteiler ST benutzt werden.

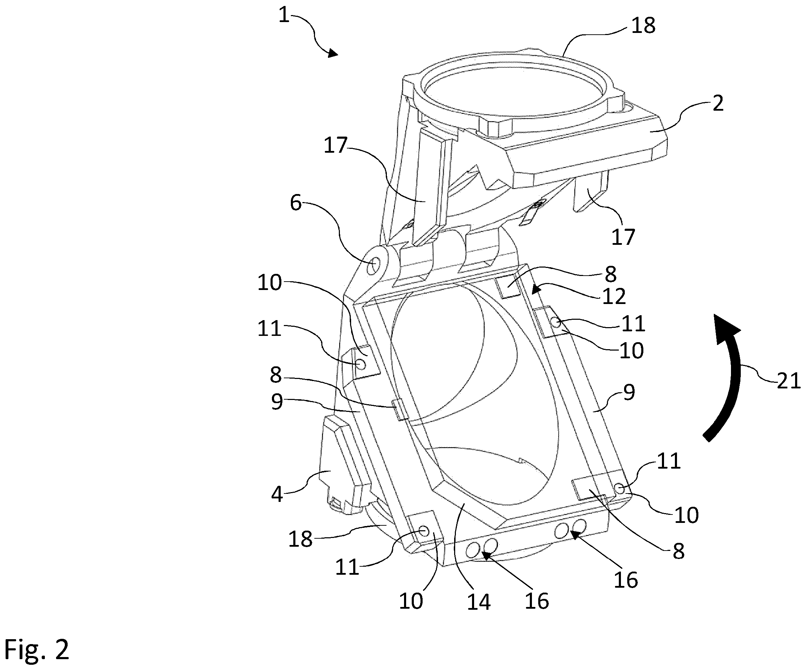

In Fig. 2 ist ein Träger 1 in einer Ausführungsform als Push&Click-Böckchen dargestellt. Der Träger 1 ist zweiteilig aufgebaut. Er besteht aus einem Unterteil 2 und einem Oberteil 4. Das Unterteil 2 und das Oberteil 4 sind mit einem Scharnier 6 miteinander verbunden. Am Oberteil 4 des Trägers 1 sind auf einem Flanschteil 9 Auflageflächen 8 und Positionierflächen 10 vorgesehen. In derselben Ebene auf dem Flanschteil, die von den Auflageflächen 8 definiert wird, befinden sich auch die Positionierflächen 10. Die Positionierflächen 10 weisen Magnete 11 auf. Auch die Auflageflächen 8 können Magnete 11 aufweisen. Auf den Auflageflächen 8 des Trägers 1 liegt ein Teiler 12, der eine plane Fläche 13 aufweist, auf. Dieser Teiler 12 weist eine Fase 14 auf. Am Oberteil 4 sind weitere Magnete 16 angebracht. Weiter sind am Träger 1 Seitenführungen 17 vorgesehen und sowohl am Unterteil 2, als auch am Oberteil 4 befindet sich ein Filterhalter 18 in einer dafür vorgesehenen Aussparung 19. Zudem ist in Fig. 2 eine Schließrichtung 21 vorgegeben.

Mit Hilfe des Trägers 1 wird der Teiler 12 in den Strahlengang des Mikroskops M eingebracht. Dazu wird der Teiler 12 mit der planen Fläche 13 , wenn die Oberseite 4 und die 2 des Trägers 1 zusammengeführt werden, an die Auflageflächen 8, welche am Oberteil 4 des Trägers 1 vorgesehen sind, angelegt und an diesen mit Hilfe von Fixiermitteln wie beispielsweise Magnete, Schrauben oder federnde Bleche befestigt. In einer Ausführungsform ist der Teiler 12 insbesondere als planparallele Platte ausgeführt. In Fig.2 ist der Teiler 12 so dargestellt, dass er mit der planen Fläche 13 an den Auflageflächen 8 anliegt, in der Praxis ist dies nur der Fall, wenn der Träger 1 geschlossen ist. Ist der Teiler 12 mit der planen Fläche 13 an den Auflageflächen 8 befestigt, darf er die Positionierflächen 10 nicht überdecken, da die Positionierflächen 10 zur Fixierung des Trägers 1 an einer Aufnahme 26 dienen. Im Ausführungsbeispiel aus Fig. 2 wird diese Fixierung des Trägers 1 an der Aufnahme 26 mit Hilfe der Fixiermittel, in diesem Ausführungsbeispiel Magnete 11 auf den Positionierflächen 10 realisiert. Mit Hilfe des Scharniers 6 kann das Oberteil 4 an das Unterteil 2 positionsgenau angelegt werden. Zur Fixierung des Oberteils am Unterteil werden in dieser Ausführungsform ebenfalls Magnete 16 verwendet, welche sich zwar am Oberteil 4, allerdings nicht auf den Positionierflächen 10 befinden. Sowohl am Oberteil 4, als auch am Unterteil 2 sind in diesem Ausführungsbeispiel Filterhalter 18 in einer Aussparung 19 angebracht, um neben der Einbringung eines Teilers 12 auch Filter 20 in den Strahlengang einzubringen.

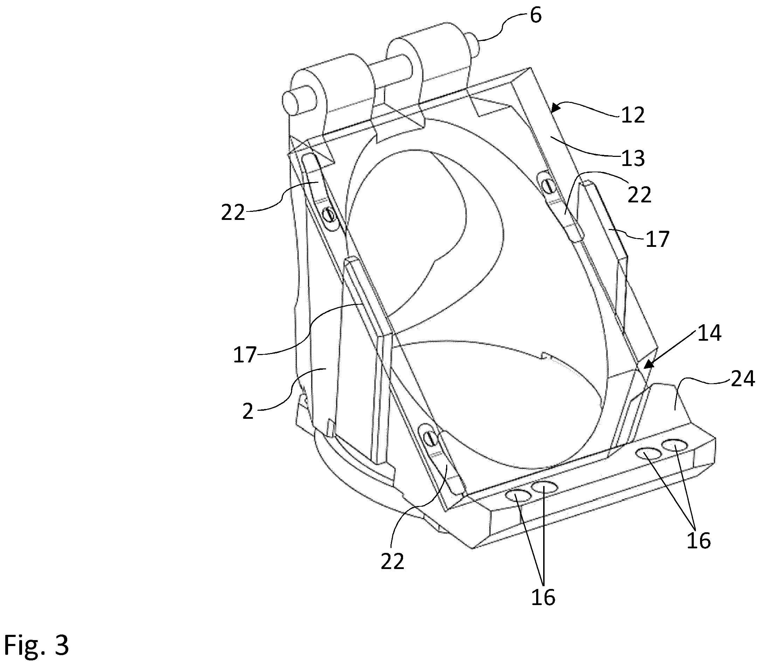

In Fig. 3 ist der Träger 1 invertiert dargestellt. Fig. 3 zeigt daher einen Blick auf das Unterteil 2 des Trägers 1, wenn dieser als Push&Click-Böckchen ausgeführt ist. Neben den bereits beschriebenen Merkmalen sind in der Darstellung in Fig. 3 federnde Elemente 22 zu erkennen, welche am Unterteil 2 des Trägers 1 befestigt sind. Außerdem ist eine weitere Fase 24 am Unterteil 2 des Trägers 1 erkennbar. Zunächst wird der Teiler 12 in den Träger 1 eingelegt, sodass er zwischen den Seitenführungen 17 positioniert ist. Diese Seitenführungen 17 verhindern eine laterale Verschiebung des Teilers 12 im eingelegten Zustand. Die federnden Elemente 22 sind in dem Ausführungsbeispiel aus Fig. 3 als Blattfedern ausgeführt. Die federnden Elemente 22 drücken den Teiler 12 mit der planen Fläche 13 derart an die Auflageflächen 8 am Oberteil 4 des Trägers, wenn der Träger 1 in Schließrichtung 21 geschlossen und so das Oberteil 4 am Unterteil 2 mittels der Magnete 16 fixiert wird, dass der Teiler 12 aufgrund der im Betrieb auftretenden Kräfte wie Fliehkraft, Beschleunigungskraft, Trägheitskräfte, oder von den beim Transport auftretenden Kräften nicht von den Auflageflächen 8 abheben kann. Weiter ist in Fig. 3 gezeigt, dass sowohl am Teiler 12, als auch am Unterteil 2 des Trägers 1 eine Fase (14, 24) vorgesehen ist. Die Fase 14 ist einseitig am Teiler und die Fase 24 ist einseitig am Unterteil 2 des Trägers 1 vorgesehen. Durch diese Anordnung wird ein seitenrichtiges Einlegen des Teilers 12 sichergestellt.

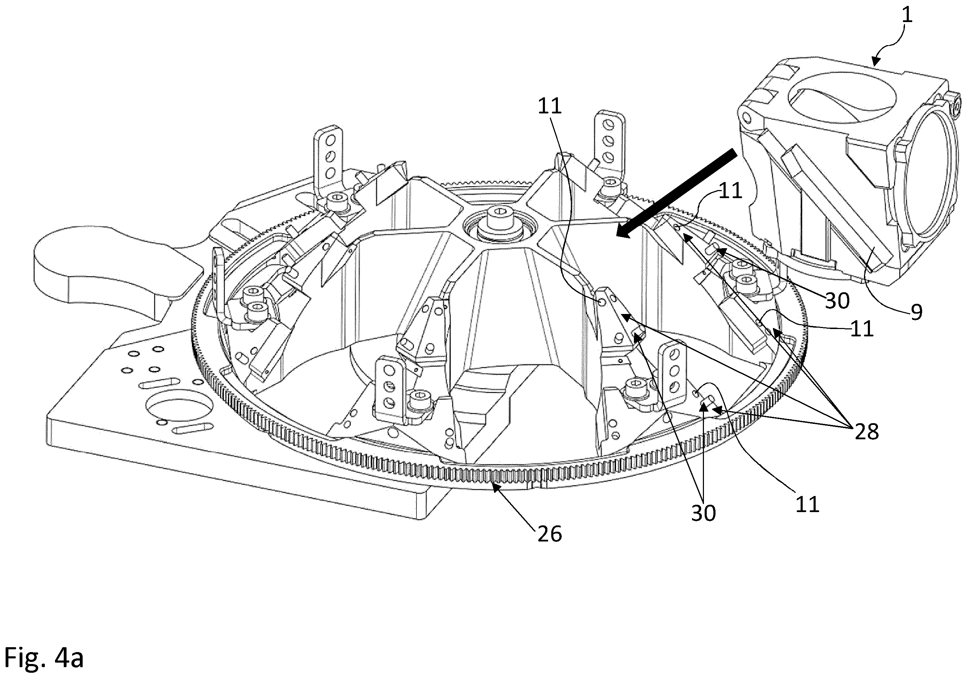

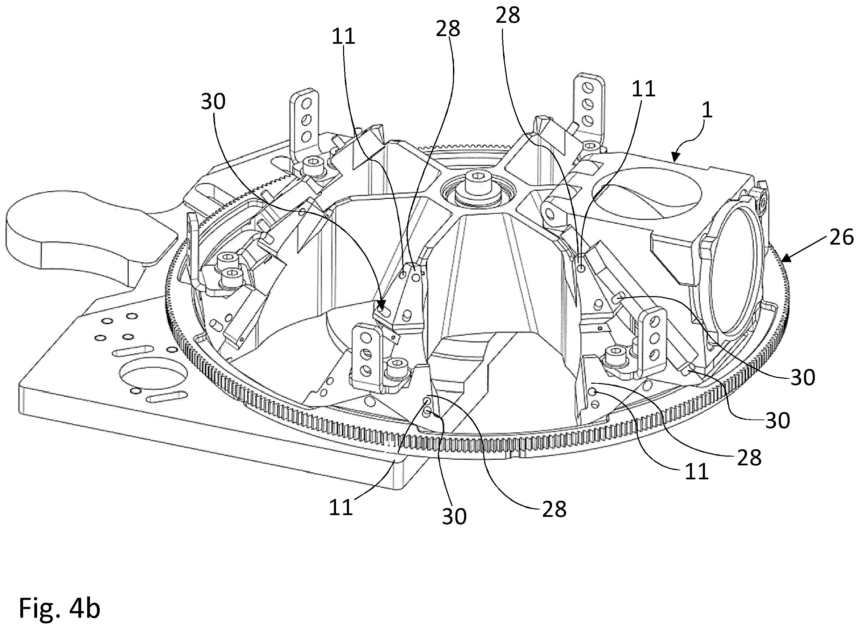

In den Figuren 4A und 4B ist die Verbindung des Trägers 1 in der Ausführungsform als Push&Click-Böckchen mit der Aufnahme 26, welche in diesem Ausführungsbeispiel als Reflektorrevolver des Mikroskops M ausgebildet ist, dargestellt. Wie sowohl in der Figur 4A, als auch in der Figur 4B zu erkennen ist, sind an der Aufnahme 26 Anlageflächen 28 und Anlagestifte 30 vorgesehen. Die Anlagestifte 30 erleichtern die Positionierung des Trägers 1 an der Aufnahme 26. Die Anlageflächen 28 liegen nach der Anbringung des Trägers 1 an die Aufnahme 26 direkt an den Positionierflächen 10 am Flanschteil 9 des Trägers 1 an und werden in diesem Ausführungsbeispiel mit Magneten 11 an diesen befestigt. Es wären ebenso eine Schraubverbindung oder eine Befestigung durch federnde Elemente oder andere geeignete Fixiereinrichtungen denkbar.

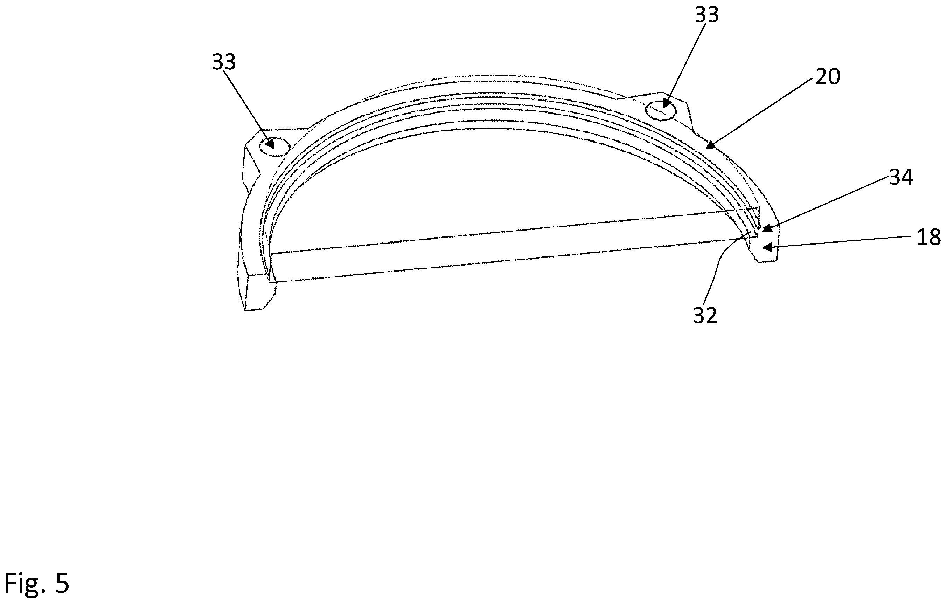

Wie bereits in Fig. 2 dargestellt, können mit Hilfe des Trägers 1 auch Filter 20 in den Strahlengang eingebracht werden. Die Fig. 5-7 stellen die Anbringung des Filters 20 an den Träger 1 dar, wenn dieser als Push&Click-Böckchen ausgeführt ist.

Fig. 5 zeigt eine Schnittdarstellung des Filterhalters 18, in dem sich der Filter 20 befindet. Bei der Schnittdarstellung in Fig. 5 handelt es sich um einen Halbschnitt. Der Filterhalter weist eine Kreisrunde Aufnahme 32 für den Filter 20 auf. Auf dieser Aufnahme 32 befindet sich eine zylindrische Passbohrung 34, in welcher der Filter 20 sitzt. Der Filterhalter 18 weist an seinem inneren Radius die Aufnahme 32 auf. Diese Aufnahme dient dazu den Filter 20 aufzunehmen. Fixiert wird der Filter 20 im Filterhalter 18 auf der Aufnahme 32 mit Hilfe der zylindrischen Passbohrung 34. In Ausführungsbeispielen ohne Filterhalter 18 kann der Filter 20 auch durch die zylindrische Passbohrung 34 direkt am Träger 1 fixiert werden. Weiter weist der Filterhalter 18 in diesem Ausführungsbeispiel vier Magnete 33 auf, welche zur Befestigung des Filterhalters in der Aussparung 19 des Trägers 1 verwendet werden.

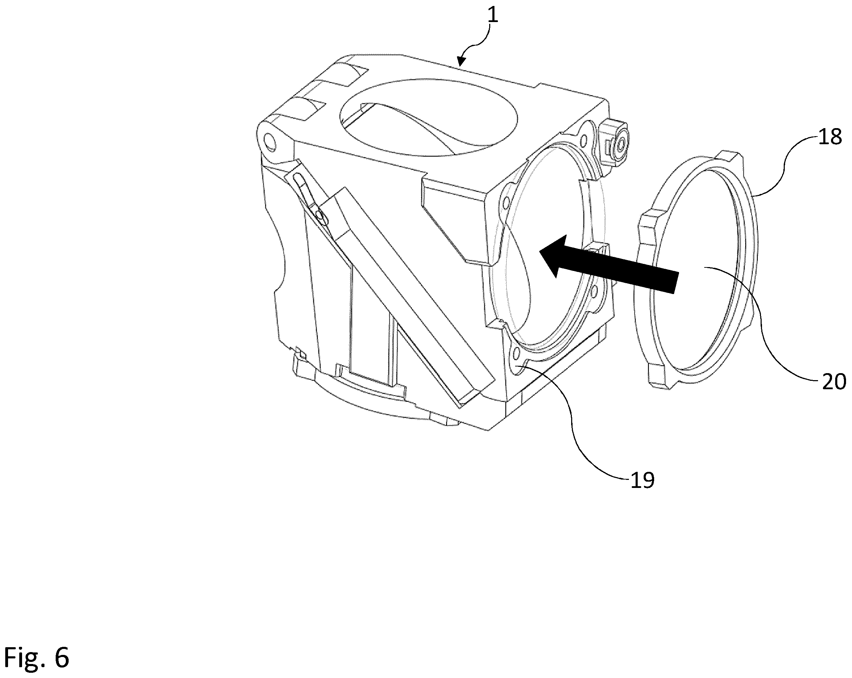

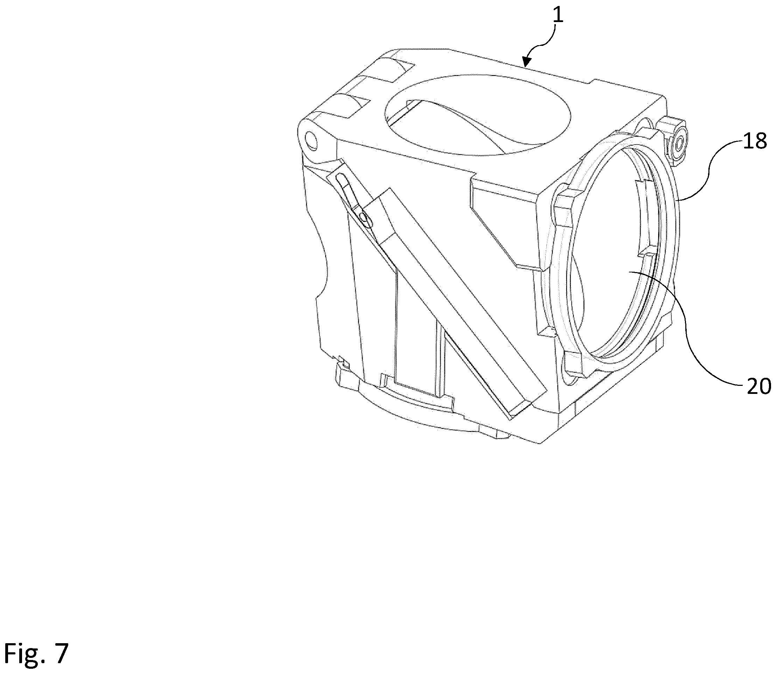

Die Fig. 6 und 7 zeigen den Einbau des Filterhalters 18 im Oberteil 4 des Trägers 1. Im Oberteil 4 des Trägers 1 ist die Aussparung 19 zum Einbau des Filterhalters 18 vorgesehen. In diese Aussparung 19 wird der Filterhalter 18 angelegt. In der Aussparung 19 befinden sich ebenfalls Magnete 33, die zusammen mit den Magneten 33 auf dem Filterhalter 18 diesen am Träger 1 befestigen.

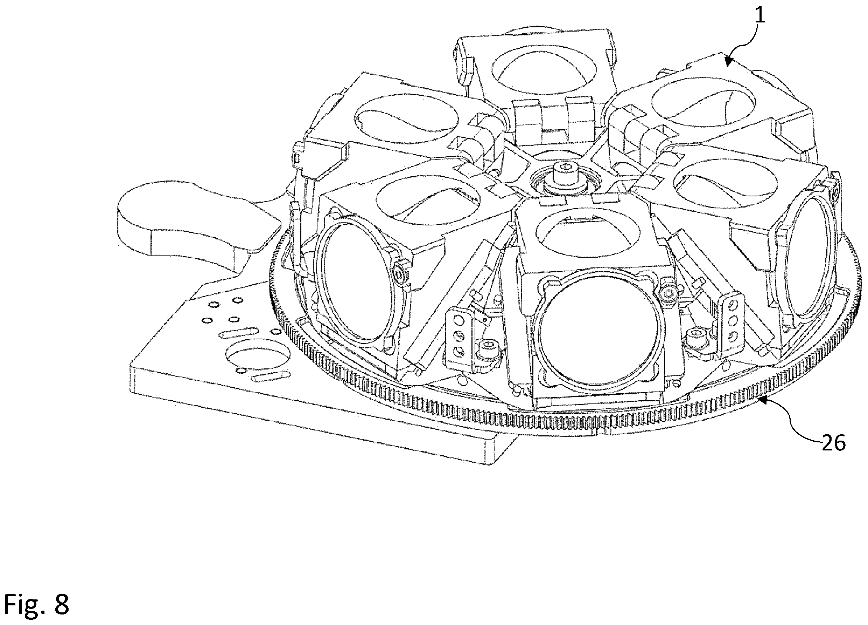

Fig. 8 zeigt die Aufnahme 26, in diesem Ausführungsbeispiel als Reflekorrevolver ausgeführt, komplett bestückt mit sechs Trägern 1, in diesem Ausführungsbeispiel als Push&Click-Böckchen ausgeführt. In Fig. 8 sind die Filter 20 und damit die Filterhalter 18, welche in den Strahlengang eingebracht werden, von derselben Größe wie in den vorangegangenen Figuren. Hier kann die Aussparung 19 und der Filterhalter 18 in der Größe angepasst werden, um die gewünschten Filter 20 in den Strahlengang einzubringen. So können mit Hilfe der Wechseleinrichtung W auch kleinere Filter 20 sowie größere Filter 20 aufgenommen werden.

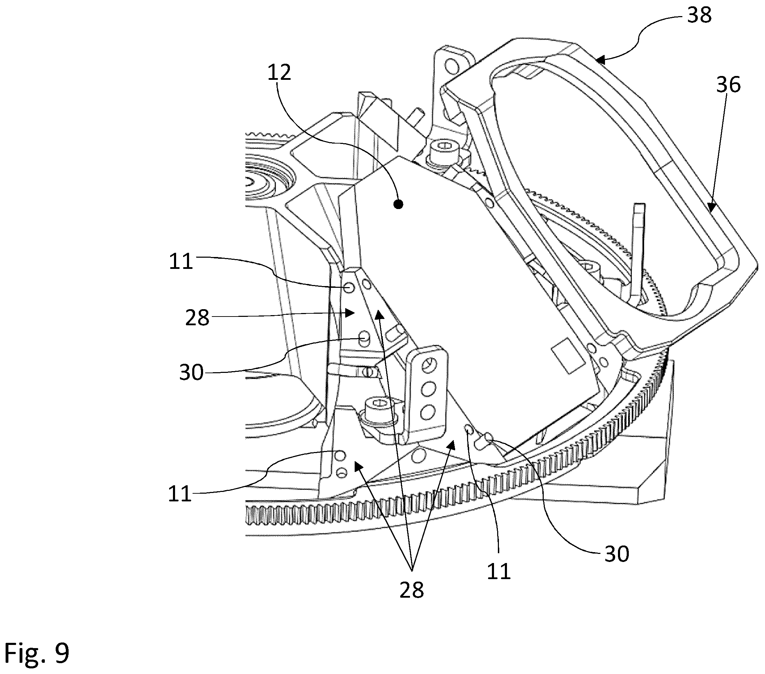

Überschreiten die Filter 20 mit ihrer lateralen Ausdehnung eine gewisse Größe, ist der Einbau in einem Push&Click-Böckchen, wie es in den vorangegangenen Figuren verwendet wurde, mitunter nicht mehr möglich. In der Wechseleinrichtung W wird dann als Träger 1 ein rahmenförmiger Halter 36 an der Aufnahme 26 eingebaut. Eine derartige Konstellation ist in Fig. 9 gezeigt.

In Fig. 9 wird der Halter 36 als Träger 1 verwendet und analog zu der Vorgehensweise in den Figuren 4A und 4B an der Aufnahme 26 befestigt. An der Aufnahme 26 sind Anlageflächen 28 und Anlagestifte 30 vorgesehen. Die Anlagestifte 30 erleichtern die Positionierung des Halters 36 an der Aufnahme 26.

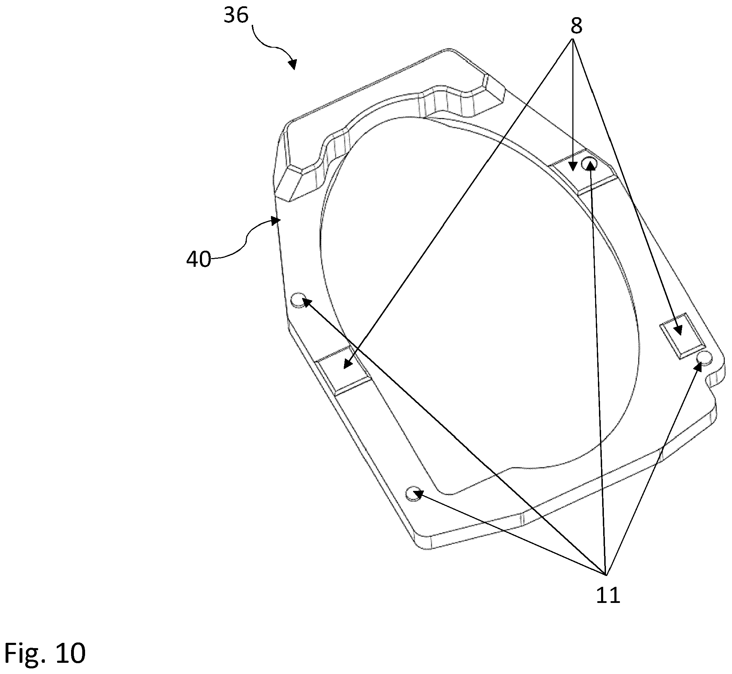

Der Halter 36 weist eine Oberseite 38 und eine Unterseite 40 auf. Fig. 10 zeigt eine Sicht auf die Unterseite 40 des Halters 36. Der Halter 36 weist an der Unterseite 40 Auflageflächen 8 auf. Weiter weist der Halter 36 an der Unterseite 40 Magnete 11 auf. Die Magnete 11 dienen der Befestigung des Halters 36 an der Aufnahme 26. Sie können sowohl an den Auflageflächen 8, als auch an den Positionierflächen 10 vorgesehen sein. Wird der Halter 36 mit dem Teiler 12 an der Aufnahme 26 befestigt, liegt der Teiler 12 mit der planen Fläche 13 an den Auflageflächen 8 des Halters 36 an.

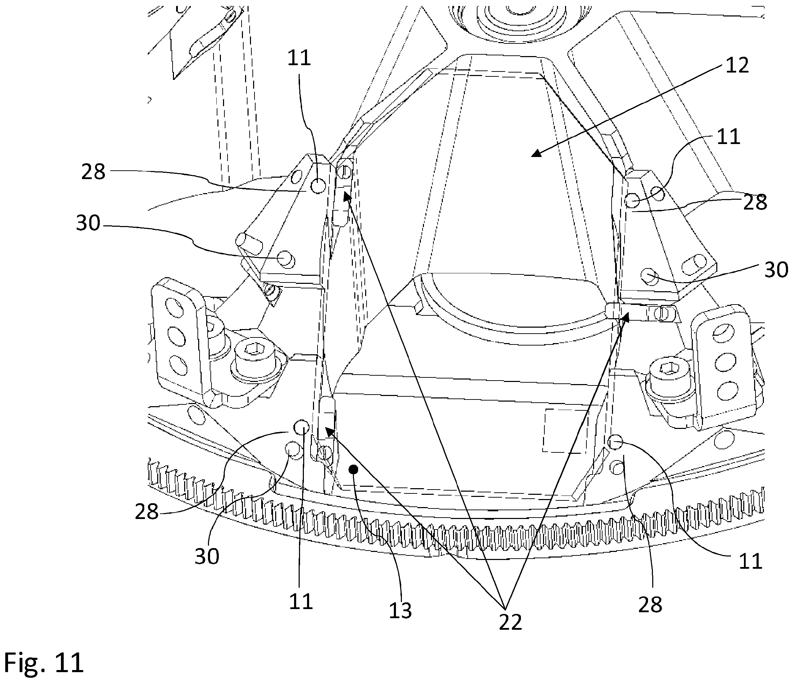

Fig. 11 zeigt eine Sicht auf die Aufnahme 26. Diese weist wie bereits beschrieben Aufnahmestifte 30 und Anlageflächen 28 auf. Weiter sind an der Aufnahme 26 in diesem Ausführungsbeispiel federnde Elemente 22 vorgesehen. Wird der Halter 36 an der Aufnahme befestigt, wird zunächst der Teiler 12 in die Aufnahme 26 eingelegt. Dieser liegt, wie in Fig. 11 gezeigt auf den federnden Elementen 22 auf, wodurch der Teiler 12 mit der planen Fläche 13 nach Befestigung des Halters 36 an der Aufnahme 26 an den Auflageflächen 8 des Halters 36 anliegt und mit den federnden Elementen 22 gegen eben diese Auflageflächen 8 gedrückt wird. In dieser Ausführungsform werden federnde Elemente 22 verwendet, denkbar wäre z.B. auch die Verwendung eines Festkörpergelenks, welches in der Aufnahme 26 integriert ist. Im vorliegenden Ausführungsbeispiel wird der Halter 36 mit Magneten 11 an der Aufnahme 26 gehalten. Die Magnetkraft ist hier entsprechend den entgegenwirkenden Kräften (Federkraft, Fliehkraft, Trägheitskräfte, etc.) dimensioniert.

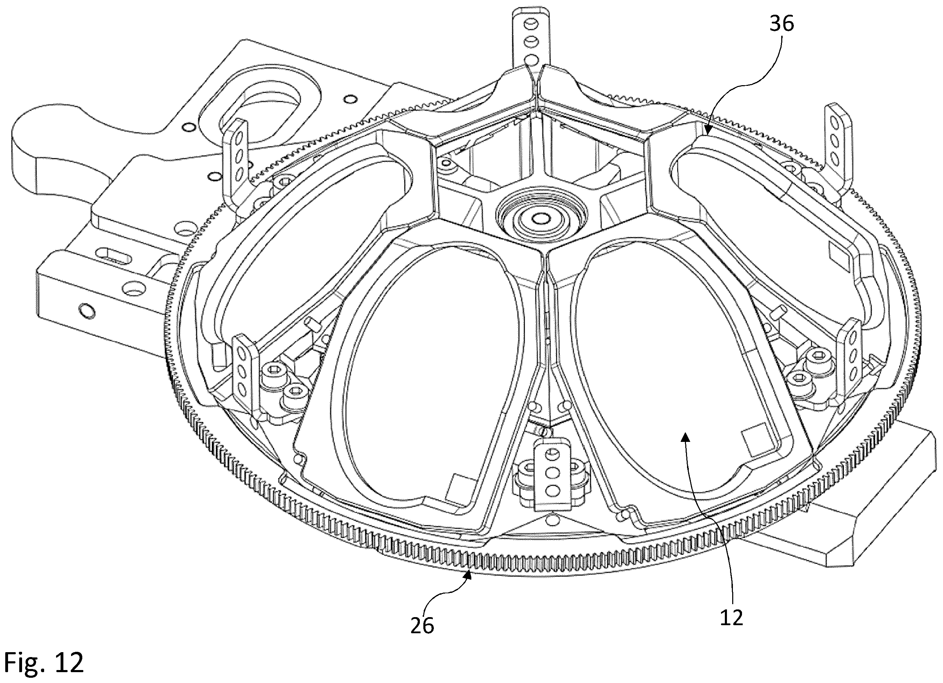

Fig. 12 zeigt die Aufnahme 26, in diesem Ausführungsbeispiel als Reflektorrevolver ausgeführt, komplett bestückt mit sechs Trägern 1, in diesem Ausführungsbeispiel als rahmenförmiger Halter 36 ausgeführt. Die Wechseleinrichtung W ermöglicht es, in diesem Ausführungsbeispiel verhältnismäßig große Filter 20 in den Strahlengang einzubringen, wobei das grundlegende Prinzip, dass die Auflageflächen 8, an denen der Teiler 12 mit der planen Fläche 13 aufliegt und die Anlageflächen 28 an denen der Träger 1 anliegt in derselben Ebene liegen beibehalten wird. Auch im in Fig. 12 gezeigten Ausführungsbeispiel liegen die Teiler 12 mit den planen Flächen 13 auf den Auflageflächen 8 des Halters 36 an. Dieser Halter 36 sitzt in derselben Ebene auf den Anlageflächen 28 der Aufnahme 26 auf.

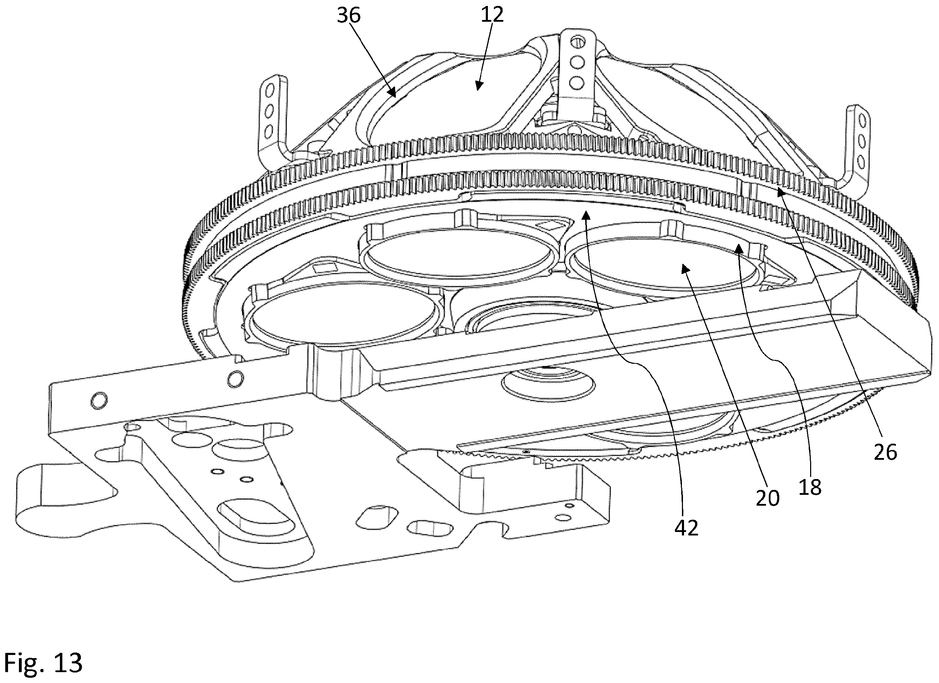

Ist die Wechseleinrichtung in einer Form wie in den Fig. 9-12 beschrieben ausgeführt, können die Filter 20 mit Hilfe der Aufnahme 26 in den Strahlengang eingebracht werden. In Figur 13 ist die Aufnahme 26 als Reflektorrevolver ausgeführt. An der Aufnahme 26 ist ein Filterrad 42 befestigt. In diesem Filterrad 42 sind analog zu dem in Fig. 8 erläuterten Prinzip Aussparungen 19 vorgesehen, in welchen die Filterhalter 18 mittels Magneten 33 befestigt werden. Eine Zentrierung der Filter 20 findet erneut über die zylindrische Passbohrung 34, entweder im Filterrad 42 oder im Filterhalter 18 statt. Die Magnetkraft zum Haltern der Filterhalter 18 in den Aussparungen 19 ist wiederum so gewählt, dass die im Betrieb oder beim Transport auftretenden Kräfte (Fliehkraft, Beschleunigungskraft, Trägheitskräfte, etc.), den Filterhalter 18 nicht von der Auflage 32 abheben können.

### Bezugszeichenliste

- 1: Träger
- 2: Unterteil
- 4: Oberteil
- 6: Scharnier
- 8: Auflagefläche
- 9: Flanschteil
- 10: Positionierfläche
- 11: Magnete
- 12: Teiler
- 13: plane Fläche
- 14: Fase
- 16: Magnet
- 17: Seitenführung
- 18: Filterhalter
- 19: Aussparung
- 20: Filter
- 21: Schließrichtung
- 22: federndes Element
- 24: Fase
- 26: Aufnahme
- 28: Anlagefläche
- 30: Anlagestifte
- 32: Auflage
- 33: Magnet
- 34: zylindrische Passbohrung
- 36: Halter
- 38: Oberseite
- 40: Unterseite
- 42: Filterrad

## Patentansprüche

1. Wechseleinrichtung für optische Komponenten bei einem Mikroskop, mit
- einer optischen Komponente (12), die eine plane Fläche (13) aufweist,
- einem Träger (1) zum Einlegen und/oder Haltern der optischen Komponente (12), und
- einer Aufnahme (26) zum Haltern des Trägers (1) in einem
- Strahlengang des Mikroskops,
**dadurch gekennzeichnet, dass**
- der Träger (1) Auflageflächen (8) für die plane Fläche (13) der optischen Komponente (1) und in derselben Ebene liegende Positionierflächen (10) aufweist, die bei eingelegter optischer Komponente (12) von dieser nicht überdeckt werden, und
- die Aufnahme (26) Anlageflächen (28) zur Anlage der Positionierflächen (10) und erste Fixiermittel (11) zur Fixierung des an der Aufnahme (26) positionierten Trägers (1) zur Beaufschlagung der Positionierflächen (10) auf die Anlageflächen (28) aufweist.

2. Wechseleinrichtung nach Anspruch 1, **gekennzeichnet durch** zweite Fixiermittel (22) zur Fixierung der optischen Komponente (12) und zur Beaufschlagung der planen Fläche (13) auf die Anlageflächen (8).

3. Wechseleinrichtung nach Anspruch 1 oder 2, **dadurch gekennzeichnet, dass** die Anlageflächen (8) und die Positionierflächen (10) an einem Flanschteil (9) ausgebildet sind.

4. Wechseleinrichtung nach einem der obigen Ansprüche, **dadurch gekennzeichnet, dass** die optische Komponente (12) ein Strahlteiler ist und die Auflageflächen (8) für die plane Fläche (13) der optischen Komponente (12) um 45° zu einer optischen Achse geneigt sind.

5. Wechseleinrichtung nach einem der obigen Ansprüche, **dadurch gekennzeichnet, dass** die Aufnahme (26) Anlagestifte (30) aufweist, die im eingebauten Zustand am Träger (1) anliegen.

6. Wechseleinrichtung nach einem der obigen Ansprüche, **dadurch gekennzeichnet, dass** der Träger (1) zweiteilig durch ein Oberteil (4) und ein Unterteil (2) ausgebildet ist, wobei die Positionierflächen (10) und die Auflageflächen (8) am Oberteil (4) ausgebildet sind und das Unterteil (2) die optische Komponente (12) am Oberteil (4) festhält.

7. Wechseleinrichtung nach Anspruch 6, **dadurch gekennzeichnet, dass** das Oberteil (4) und das Unterteil (2) mit einem Scharnier (6) verbunden sind.

8. Wechseleinrichtung nach Anspruch 6 oder 7, **dadurch gekennzeichnet, dass** das Oberteil (4) und das Unterteil (2) mit Magneten, Schrauben und/oder federnden Blechen gegeneinander fixiert sind.

9. Wechseleinrichtung nach einem der obigen Ansprüche, **dadurch gekennzeichnet, dass** die ersten und/oder zweiten Fixiermittel Schrauben, Magnete und/oder Federn umfassen.

10. Wechseleinrichtung nach einem der obigen Ansprüche, **dadurch gekennzeichnet, dass** am Träger (1) Aussparungen für die Befestigung von Filterhaltern (18) vorgesehen sind.

11. Wechseleinrichtung nach Anspruch 10, **dadurch gekennzeichnet, dass** in den Aussparungen (19) Magnete (11) zur Befestigung der Filterhalter (18) angebracht sind.

12. Wechseleinrichtung nach Anspruch 10 oder 11, **dadurch gekennzeichnet, dass** ein Filter (20) durch eine zylindrische Passbohrung im Filterhalter (18) und/oder im Träger (1) zentriert wird.

13. Wechseleinrichtung nach einem der obigen Ansprüche, **dadurch gekennzeichnet, dass** der Träger (1) und die optische Komponente (12) eine einseitige Fase (14, 24) zur Positionierung der optischen Komponente (12) in der durch die Positionierflächen (10) und die Anlageflächen (8) definierte Ebene umfasst.

## Claims

1. Changing device for optical components in a microscope, comprising
- an optical component (12) having a flat surface (13),
- a carrier (1) for inserting and/or holding the optical component (12), and
- a receptacle (26) for holding the carrier (1) in a
- beam path of the microscope,
**characterized in that**
- the carrier (1) has support surfaces (8) for the flat surface (13) of the optical component (1) and positioning surfaces (10) located in the same plane, which are not covered by the optical component (12) when the latter has been inserted, and
- the receptacle (26) has bearing surfaces (28) for the placement of the positioning surfaces (10) and first fixing means (11) for fixing the carrier (1) positioned on the receptacle (26) in order for the positioning surfaces (10) to act on the bearing surfaces (28).

2. Changing device according to Claim 1, **characterized by** second fixing means (22) for fixing the optical component (12) and in order for the flat surface (13) to act on the bearing surfaces (8).

3. Changing device according to Claim 1 or 2, **characterized in that** the bearing surfaces (8) and the positioning surfaces (10) are formed on a flange part (9).

4. Changing device according to any of the preceding claims, **characterized in that** the optical component (12) is a beam splitter and the support surfaces (8) for the flat surface (13) of the optical component (12) are inclined by 45° with respect to an optical axis.

5. Changing device according to any of the preceding claims, **characterized in that** the receptacle (26) has bearing pins (30), which bear against the carrier (1) in the installed state.

6. Changing device according to any of the preceding claims, **characterized in that** the carrier (1) is formed in two parts by an upper part (4) and a lower part (2), wherein the positioning surfaces (10) and the support surfaces (8) are formed on the upper part (4) and the lower part (2) secures the optical component (12) on the upper part (4).

7. Changing device according to Claim 6, **characterized in that** the upper part (4) and the lower part (2) are connected to a hinge (6).

8. Changing device according to Claim 6 or 7, **characterized in that** the upper part (4) and the lower part (2) are fixed against each other with magnets, screws and/or resilient plates.

9. Changing device according to any of the preceding claims, **characterized in that** the first and/or second fixing means comprise screws, magnets and/or springs.

10. Changing device according to any of the preceding claims, **characterized in that** recesses for the securing of filter holders (18) are provided on the carrier (1).

11. Changing device according to Claim 10, **characterized in that** magnets (11) for securing the filter holders (18) are mounted in the recesses (19).

12. Changing device according to Claim 10 or 11, **characterized in that** a filter (20) is centred through a cylindrical fitting hole in the filter holder (18) and/or in the carrier (1).

13. Changing device according to any of the preceding claims, **characterized in that** the carrier (1) and the optical component (12) comprise a one-sided chamfer (14, 24) for positioning the optical component (12) in the plane defined by the positioning surfaces (10) and the bearing surfaces (8).

## Revendications

1. Dispositif de changement pour composants optiques dans un microscope, comprenant
un composant optique (12) qui présente une surface plane (13),
un support (1) pour insérer et/ou maintenir le composant optique (12), et
un logement (26) pour maintenir le support (1) dans un chemin optique du microscope,
**caractérisé en ce que**
le support (1) présente des surfaces d'appui (8) pour la surface plane (13) du composant optique (1) et des surfaces de positionnement (10) situées dans le même plan, qui ne sont pas recouvertes par le composant optique (12) lorsque celui-ci est inséré, et
le logement (26) présente des surfaces d'appui (28) permettant la mise en place des surfaces de positionnement (10) et des premiers moyens de fixation (11) pour fixer le support (1) positionné sur le logement (26) afin d'appliquer les surfaces de positionnement (10) sur les surfaces d'appui (28).

2. Dispositif de changement selon la revendication 1, **caractérisé par** des deuxièmes moyens de fixation (22) destinés à fixer le composant optique (12) et à appliquer la surface plane (13) sur les surfaces d'appui (8).

3. Dispositif de changement selon la revendication 1 ou 2, **caractérisé en ce que** les surfaces d'appui (8) et les surfaces de positionnement (10) sont formées sur une partie de bride (9).

4. Dispositif de changement selon l'une des revendications précédentes, **caractérisé en ce que** le composant optique (12) est un diviseur de faisceau et que les surfaces d'appui (8) destinées à la surface plane (13) du composant optique (12) sont inclinées de 45° par rapport à un axe optique.

5. Dispositif de changement selon l'une des revendications précédentes, **caractérisé en ce que** le logement (26) présente des broches d'appui (30) qui reposent sur le support (1) à l'état monté.

6. Dispositif de changement selon l'une des revendications précédentes, **caractérisé en ce que** le support (1) est formé en deux parties par une partie supérieure (4) et une partie inférieure (2), les surfaces de positionnement (10) et les surfaces d'appui (8) étant formées sur la partie supérieure (4) et la partie inférieure (2) maintenant le composant optique (12) sur la partie supérieure (4).

7. Dispositif de changement selon la revendication 6, **caractérisé en ce que** la partie supérieure (4) et la partie inférieure (2) sont reliées par une charnière (6).

8. Dispositif de changement selon la revendication 6 ou 7, **caractérisé en ce que** la partie supérieure (4) et la partie inférieure (2) sont fixées l'une à l'autre par des aimants, des vis et/ou des tôles élastiques.

9. Dispositif de changement selon l'une des revendications précédentes, **caractérisé en ce que** les premiers et/ou deuxièmes moyens de fixation comprennent des vis, des aimants et/ou des ressorts.

10. Dispositif de changement selon l'une des revendications précédentes, **caractérisé en ce que** des évidements sont prévus sur le support (1) pour fixer des porte-filtres (18).

11. Dispositif de changement selon la revendication 10, **caractérisé en ce que** des aimants (11) sont montés dans les évidements (19) pour fixer les porte-filtres (18).

12. Dispositif de changement selon la revendication 10 ou 11, **caractérisé en ce qu'**un filtre (20) est centré par un alésage cylindrique dans le porte-filtre (18) et/ou dans le support (1).

13. Dispositif de changement selon l'une des revendications précédentes, **caractérisé en ce que** le support (1) et le composant optique (12) comprennent un chanfrein unilatéral (14, 24) pour le positionnement du composant optique (12) dans le plan défini par les surfaces de positionnement (10) et les surfaces d'appui (8).
